# EUROPÄISCHE PATENTANMELDUNG

(11) **EP 4 717 534 A1**
(43) Veröffentlichungstag der Anmeldung: **01.04.2026**
(21) Anmeldenummer: 25203975.5
(22) Anmeldetag: 23.09.2025
(51) Int. Cl.: B60T 7/12, B60T 8/17, B60T 8/34, B60T 13/40, B60T 13/66, B60T 13/68, B60T 15/02, B60T 17/22, B61G 5/06, B61L 15/00

(54) **GÜTERZUG**

(30) Priorität: 30.09.2024 DE 102024128184
(71) Anmelder: Voith Patent GmbH, 89522 Heidenheim (DE)
(72) Erfinder: Schwab, Thomas, 89522 Heidenheim (DE); Schüler, Martin, 42929 Wermelskirchen (DE); Arnold, Matthias, 16540 Hohen Neuendorf (DE)
(74) Vertreter: Voith Patent GmbH - Patentabteilung

(57) **Zusammenfassung**

Die Erfindung betrifft einen Güterzug, umfassend eine Vielzahl von mechanisch und elektrisch miteinander gekuppelten Wagen (1);
mit einer Hauptluftleitung (HL) die sich über Kupplungen (2) zwischen den Wagen durch alle Wagen erstreckt;
mit an der Hauptluftleitung angeschlossenen Bremsen in dem oder jedem Wagen, welche eingerichtet sind, in Abhängigkeit eines Luftdruckes in der Hauptluftleitung den jeweiligen Wagen abzubremsen.

Der erfindungsgemäße Güterzug ist gekennzeichnet durch die folgenden Merkmale:
mit wenigstens einem elektrischen Aktuator (5) in einem oder jedem Wagen;
mit einer Wagenerkennungsvorrichtung, die eingerichtet ist, die Abwesenheit eines zu dem jeweiligen Wagen mit dem elektrischen Aktuator benachbart angeordneten Wagens zu erkennen;
mit wenigstens einem an der Hauptluftleitung angeschlossenen pneumatischen Ventil (6), mit dem die Hauptluftleitung entlüftet werden kann; wobei
der elektrische Aktuator an dem wenigstens einen pneumatischen Ventil (6) zu dessen Betätigung angeschlossen ist, und
der elektrische Aktuator an der Wagenerkennungsvorrichtung angeschlossen ist, um bei erkannter Abwesenheit des benachbarten Wagens das pneumatische Ventil zur Entlüftung der Hauptluftleitung zu schalten.

## Beschreibung

Die vorliegende Erfindung betrifft einen Güterzug mit einer Vielzahl von mechanisch, pneumatisch und elektrisch miteinander gekuppelten Wagen.

Bekannte Güterzüge weisen eine Hauptluftleitung auf, die sich über pneumatische Kupplungen zwischen den Wagen durch alle Wagen hindurch über den Güterzug erstreckt. An der Hauptluftleitung sind Bremsen in jedem Wagen angeschlossen, welche eingerichtet sind, in Abhängigkeit eines Luftdruckes in der Hauptluftleitung den jeweiligen Wagen abzubremsen. Wenn zwei miteinander gekuppelte Wagen unbeabsichtigt voneinander getrennt werden, so wird auch die Hauptluftleitung zwischen diesen Wagen getrennt, wodurch die Hauptluftleitung entlüftet wird, sodass eine automatische Bremsung der Wagen erfolgt.

Wenn die Hauptluftleitung jedoch innerhalb des Zuges oder an Entkuppelbeziehungsweise Trennstellen durch Ventile oder andere Möglichkeiten, zum Beispiel durch ein Abknicken, unterbrochen wird, ohne dass hierbei Druck entweicht, dann kann eine Zugtrennung unbemerkt bleiben und das automatische Bremsen nicht erfolgen. Die führt zu einem Sicherheitsrisiko.

Zudem ist die Ausbreitung des Luftdruckabfalls in aneinander gekuppelten Wagen, die zum Abbremsen der Wagen führt, träge.

Der vorliegenden Erfindung liegt die Aufgabe zugrunde, einen Güterzug anzugeben, dessen Integrität besser überwacht werden kann, um im Fall einer Trennung des Zugverbands entsprechende Sicherheitsmaßnahmen zu ergreifen. Vorteilhaft soll zudem die Möglichkeit geschaffen werden, Bremsen der Wagen auch unabhängig von einem Druckabfall in der Hauptluftleitung zu aktivieren, um dadurch eine schnellere gezielte Aktivierung der Bremsen zu ermöglichen.

Die erfindungsgemäße Aufgabe wird durch einen Güterzug mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Güterzug umfasst eine Vielzahl von mechanisch, pneumatisch und elektrisch miteinander gekuppelten Wagen. Entsprechend sind Zugkupplungen an den Wagen vorgesehen, beispielsweise Mittelpufferkupplungen, insbesondere der Scharfenbergkupplung-Bauart, die die mechanische und elektrische Kopplung der Wagen untereinander herstellen.

Der erfindungsgemäße Güterzug umfasst ferner eine Hauptluftleitung, die sich über Kupplungen, die auch als Hauptluftleitungskupplungen bezeichnet werden können, zwischen den Wagen durch alle Wagen erstreckt. Diese Kupplungen können in die genannten Zugkupplungen integriert sein.

An der Hauptluftleitung sind Bremsen in den Wagen, insbesondere in jedem Wagen angeschlossen, welche eingerichtet sind, in Abhängigkeit eines Luftdruckes in der Hauptluftleitung den jeweiligen Wagen abzubremsen. Bei einem Druckabfall in der Hauptluftleitung kann entsprechend die jeweilige Bremse, die nicht mehr mit einem ausreichendem Luftdruck aus der Hauptluftleitung versorgt wird, automatisch zur Abbremsung des Wagens, in der sie angeordnet ist, aktiviert werden. Somit kann der Luftdruck der Hauptluftleitung indirekt oder direkt auf die Bremsen wirken, die vorteilhaft als pneumatische Bremsen ausgeführt sind.

Es ist eine elektrische Spannungsversorgung vorgesehen. Diese kann in wenigstens einem Wagen vorgesehen sein. Das bedeutet, dass mit der elektrischen Spannungsversorgung eines Wagens, beispielweise der Lok, die anderen Wagen des Güterzugs über entsprechende durch die Wagen reichende elektrische Leitungen mit elektrischer Spannung versorgt werden. Alternativ sind in den einzelnen Wagen jeweils eigene elektrische Spannungsversorgungen vorgesehen. Die Spannungsversorgung kann prinzipiell auch über eine Oberleitung erfolgen.

Mischformen sind möglich. Daraus ergeben sich zum Beispiel die folgenden drei Alternativen der Spannungsversorgung:
1. Zentrale Spannungsversorgung für alle Wagen: Diese befindet sich auf der Lok und wird zu allen Wagons über elektrische Leitungen geführt.
2. Dezentrale Spannungsversorgung auf jedem Wagen: Auf jedem Wagen befindet sich eine Spannungsversorgung (z.B. ein elektrischer Generator) mit oder ohne Energiespeicher (z.B. eine Batterie).
3. Dezentrale und zentrale Spannungsversorgung gemischt: Auf der Lok befindet sich eine zentrale Spannungsversorgung. Zusätzlich hat jeder Wagon eine Energiespeichereinheit (z.B. Batterie), um den Wagen, wenn er von der Lok abgekuppelt ist, mit Energie zu versorgen.

Erfindungsgemäß ist in einem oder in jedem Wagen wenigstens ein elektrischer Aktuator angeordnet, sowie wenigstens ein an der Hauptluftleitung angeschlossenes pneumatisches Ventil, mit dem die Hauptluftleitung entlüftet werden kann.

Erfindungsgemäß ist ferner eine Wagenerkennungsvorrichtung vorgesehen, die eingerichtet ist, die Abwesenheit eines zu dem jeweiligen Wagen, der den elektrischen Aktuator aufweist, benachbart angeordneten Wagens zu erkennen. Der elektrische Aktuator ist derart an der Wagenerkennungsvorrichtung angeschlossen, dass er bei erkannter Abwesenheit des benachbarten Wagens das pneumatische Ventil zur Entlüftung der Hauptluftleitung schaltet.

Bevorzugt umfasst die Wagenerkennungsvorrichtung elektrische Kontakte zwischen dem Wagen und dem benachbart angeordneten Wagen, die bei aneinander gekuppelten Wagen geschlossen sind und bei Trennung des Wagens vom benachbart angeordneten Wagen geöffnet werden. Der elektrische Aktuator wird über die elektrischen Kontakte mit elektrischer Spannung versorgt und ist eingerichtet, im stromlosen Zustand das pneumatische Ventil zur Entlüftung der Hauptluftleitung zu schalten, um dadurch den Wagen abzubremsen. Die elektrischen Kontakte sind zum Beispiel als Steckverbindungen ausgeführt, innerhalb der Zugkupplung oder auch zusätzlich außerhalb.

Der elektrische Aktuator und das pneumatische Ventil können auch zu einer Baueinheit in Form eines elektropneumatischen Ventils zusammengefasst sein. Somit sind dann der elektrische Aktuator und das pneumatische Ventil integral ausgeführt.

Bei Unterbrechung der elektrischen Verbindung zwischen der Spannungsversorgung und dem elektrischen Aktuator schaltet der elektrische Aktuator das pneumatische Ventil, sodass dieses die Hauptluftleitung, an der es angeschlossen ist, entlüftet. Unter Schalten ist auch ein passives Schalten zu verstehen, das heißt der elektrische Aktuator unterbricht zum Beispiel seine Betätigungskraft auf das pneumatische Ventil, mit der es in der die Hauptluftleitung gegenüber der Umgebung abdichtenden Stellung gehalten wird. Beispielsweise weist das pneumatische Ventil einen Federspeicher auf, insbesondere in Form einer Druckfeder, und der elektrische Aktuator hält, solange er an der Spannungsversorgung angeschlossen ist, einen Ventilkörper des pneumatischen Ventils entgegen der Kraft des Federspeichers in einer geschlossenen Stellung, in der er die Hauptluftleitung gegenüber der Umgebung abdichtet. Im stromlosen Zustand hingegen, wenn also die Verbindung zwischen der Spannungsversorgung und dem elektrischen Aktuator unterbrochen ist, kann der elektrische Aktuator die dem Federspeicher entgegenwirkende Kraft nicht mehr erzeugen und der Federspeichers bewegt den Ventilkörper in eine die Hauptluftleitung entlüftende Stellung. Insofern ist unter Schalten des pneumatischen Ventils durch den elektrischen Aktuator auch das Aufheben einer durch den elektrischen Aktuator zuvor, das heißt im bestromten Zustand, aufgebrachten Kraft zu verstehen. Gleichwohl ist es aber auch möglich, dass der elektrische Aktuator einen Federspeicher aufweist, dessen Stellkraft im mit elektrischer Spannung versorgten Zustand des elektrischen Aktuators durch den elektrischen Aktuator, insbesondere einen Elektromagneten desselben, blockiert wird und der im stromlosen Zustand des elektrischen Aktuators zumindest mittelbar auf das pneumatische Ventil wirkt, um dieses zu schalten, sodass es die Hauptluftleitung entlüftet.

Die Erfindung bietet den Vorteil, dass elektrisch überwacht wird, ob zwei Wagen des Güterzugs versehentlich voneinander getrennt wurden. Eine Entlüftung der Hauptluftleitung kann dabei bei der Auftrennung des Güterzugs an jeglicher Stelle äußerst rasch erfolgen, um die Bremsung der Wagen zu bewirken.

Wenn die elektrisch leitende Verbindung zwischen der Spannungsversorgung und dem elektrischen Aktuator über elektrische Kontakte, insbesondere Steckverbindungen, zwischen dem Wagen mit dem jeweiligen elektrischen Aktuator und dem benachbarten Wagen ausgeführt ist, wird eine elektrische Sicherheitsschleife, die über den gesamten Güterzug reicht, geschaffen, bei deren Unterbrechung die Bremsen durch die elektrischen Aktuatoren mittelbar betätigt werden. Da die Spannungsversorgung durch eine Auftrennung der elektrischen Leitung in der gesamten Sicherheitsschleife beendet wird, sprechen alle daran angeschlossenen elektrischen Aktuatoren in den verschiedenen Wagen gleichzeitig an und schalten die ihnen zugeordneten pneumatischen Ventile, um den jeweiligen Wagen abzubremsen. Gegenüber einer herkömmlichen Lösung, bei der sich zunächst der Druckabfall in der Hauptluftleitung durch die verschiedenen Wagen ausbreiten musste, damit deren Bremsen betätigt werden, erfolgt die Bremsbetätigung nun viel schneller.

Eine solche elektrische Sicherheitsschleife hat die Funktion einer Hauptluftleitungsentlüftungsredundanz, da selbstverständlich auch der Druckabfall über eine nicht verschlossene Hauptluftleitungskupplung zu einem Abbremsen des entsprechenden Wagens oder der entsprechenden Wagen führt.

Eine elektrische Sicherheitsschleife kann gemäß einer Ausführungsform der Erfindung zusätzlich zu einer Spannungsversorgungsschleife zwischen den Wagen vorgesehen sein, das bedeutet, dass mehrere oder alle Wagen über eine zentrale Spannungsversorgung in einem Wagen mit elektrischer Spannung über elektrische Kontakte versorgt werden, die beispielsweise Bestandteil der Zugkupplung, wie Mittelpufferkupplung oder Scharfenbergkupplung, sind. Die elektrischen Kontakte, über welche der oder die elektrischen Aktuatoren mit Spannung versorgt werden, sind dann zusätzlich zu den elektrischen Kontakten der Spannungsversorgungsschleife zwischen den Wagen vorgesehen. Gemäß einer alternativen Ausführungsform werden auch der oder die elektrischen Aktuatoren über eine solche Spannungsversorgungsschleife mit elektrischer Spannung versorgt, sodass entsprechend diese Spannungsversorgungsschleife als elektrische Sicherheitsschleife wirkt.

Gemäß einer alternativen Ausführungsform, die auch mit der zuvor genannten Ausführungsform kombiniert werden kann, umfasst die Wagenerkennungsvorrichtung wenigstens ein Sensor, der auch Sensorschalter genannt werden kann, zur Erkennung des Vorhandenseins des benachbarten Wagens. Der Sensor ist bevorzugt derart gestaltet, dass er einen Anschluss zwischen einer Spannungsversorgung und dem elektrischen Aktuator unterbricht, wenn ein benachbarter Wagen nicht erkannt wird, also die Abwesenheit des benachbarten Wagens erkannt wird. Bevorzugt kann dabei auch eine Spannungsversorgung der elektrischen Aktuatoren aller Wagen, die an den Wagen gekuppelt sind, dessen Sensor die Abwesenheit des benachbarten Wagens erkannt hat, unterbrochen werden oder eine zentrale Spannungsversorgung dieser Wagen insgesamt unterbrochen werden, sodass in diesen ebenfalls sofort eine Bremsung über die elektrischen Aktuatoren und die an diesen angeschlossenen pneumatischen Ventile eingeleitet wird.

Beispielsweise umfasst der wenigstens eine Sensor einen Näherungssensor und/oder ist eingerichtet, eine Unterbrechung einer Funkverbindung zwischen dem Wagen und dem benachbarten Wagen zu erfassen. Eine solche Funkverbindung kann beispielsweise eine RFID-Strecke oder auch eine andere Funkstrecke umfassen, die zwischen dem Wagen und dem benachbarten Wagen aufgebaut ist, solange keine unerwünschte Trennung des Wagens von dem oder den benachbarten Wagen erfolgt ist. Der Sensor kann einen elektrischen Schalter umfassen oder einen solchen betätigen, der im Anschluss zwischen der Spannungsversorgung und dem elektrischen Aktuator angeordnet ist.

Gemäß einer bevorzugten Ausführungsform der Erfindung ist in dem Anschluss zwischen einer Spannungsversorgung für den elektrischen Aktuator und dem elektrischen Aktuator ein elektrischer Schalter angeordnet, der zumindest mittelbar manuell oder durch eine elektronische Steuervorrichtung betätigbar ist, um den elektrischen Aktuator im Sinne eines (passiven) Schaltens des pneumatischen Ventils zur Entlüftung der Hauptluftleitung zu betätigen. Dadurch ist es möglich, den Wagen mit dem elektrischen Aktuator und dem pneumatischen Ventil gezielt abzubremsen, auch wenn keine unerwünschte Auftrennung des Güterzugs beziehungsweise des Zugverbands stattgefunden hat.

Bevorzugt ist das pneumatische Ventil deaktivierbar, insbesondere elektrisch, pneumatisch oder manuell. Dadurch kann ein automatisches Abbremsen eines Wagens gezielt blockiert werden, beispielsweise beim Rangier- oder Schiebebetrieb.

In einer weitergebildeten Ausführungsform ist zwischen der Hauptluftleitung und dem pneumatischen Ventil ein Deaktivierungsventil positioniert, mit welchem eine pneumatische Verbindung zwischen der Hauptluftleitung und dem pneumatischen Ventil absperrbar ist. Dadurch kann im abgesperrten Zustand mit dem pneumatischen Ventil die Hauptluftleitung nicht mehr entlüftet werden, sodass das automatische Abbremsen blockiert wird. Beispielsweise ist das Deaktivierungsventil elektrisch, pneumatisch oder manuell betätigbar, insbesondere ferngesteuert von einem Führerstand des Güterzugs aus und/oder lokal an dem jeweiligen Wagen.

Gemäß einer bevorzugten Ausführungsform ist ein elektrischer Parallelzweig parallel zum elektrischen Aktuator geschaltet, wobei der Parallelzweig einen Kondensator und einen elektrischen Widerstand umfasst, die in Reihe zueinander geschaltet sind. Insbesondere ist in Reihe zu dem Kondensator eine Diode geschaltet, bevorzugt vor einem Abzweig des elektrischen Parallelzweiges vor dem elektrischen Aktuator. Der elektrische Parallelzweig hat eine elektrische Pufferwirkung und vermeidet, dass kurzzeitige Stromunterbrechungen zu einem Auslösen der Bremsung führen. Die Diode verhindert, dass sich der Kondensator unerwünscht entlädt.

Gemäß einer weitergebildeten Ausführungsform der Erfindung umfasst der Güterzug ein Kommunikationssystem, insbesondere digitales Kommunikationssystem, das wenigstens eine durch die Wagen geführte Kommunikationsleitung und in den Wagen angeordnete, an der Kommunikationsleitung angeschlossene Steuergeräte aufweist. Die Steuergeräte sind zumindest mittelbar an den pneumatischen Ventilen oder den Deaktivierungsventilen angeschlossen, um wenigstens ein pneumatisches Ventil wahlweise zu deaktivieren und/oder zu betätigen.

Vorteilhaft sind die elektrischen Schalter zumindest mittelbar an den Steuergeräten angeschlossen und durch die Steuergeräte betätigbar.

Auch kann mit dem Kommunikationssystem gemäß einer Ausführungsform eine Nachbarschaftserkennung analog zu der Ausführungsform mit dem Sensor ausgebildet werden, wenn das Kommunikationssystem erfasst, beispielsweise durch Erfassen, ob eine Spannungsversorgung für einen Wagen noch besteht, und, falls nicht, den Anschluss zwischen einer Spannungsversorgung und dem elektrischen Aktuator unterbricht. Das Kommunikationssystem kann jedoch auch mit der Sensorlösung kombiniert werden.

Gemäß einer Weiterbildung der Erfindung ist ein elektronischer Deaktivierungsaktuator am Deaktivierungsventil angeschlossen, der vom zugeordneten Steuergerät des Wagens betätigbar ist.

Die Steuergeräte können zum Beispiel auch eingerichtet sein, eine Unterbrechung der Kommunikationsleitung zu erfassen und bei einer erfassten Unterbrechung das oder die pneumatischen Ventile des oder der nicht mehr mit der Kommunikationsleitung verbundenen Wagen oder eines einzelnen Wagens, zum Beispiel des letzten Wagens eines nicht mehr verbunden Zugteils, zu betätigen, um die Hauptluftleitung zu entlüften.

In einer weitergebildeten Ausführungsform ist auch eine elektrisch betätigte Bremse realisierbar, die durch Betätigung des (elektro-)pneumatischen Ventils aktiviert wird.

Die Funktion der hier beschriebenen Steuergeräte kann in einer belieben Anzahl von Steuergeräten integriert sein, das heißt, ein Steuergerät kann verschiedene hier beschriebene Funktionen aufweisen beziehungsweise ansteuern. Auch kann die hier genannte Steuervorrichtung zur ferngesteuerten gezielten Abbremsung in das Steuergerät integriert werden.

Bevorzugt ist ein Informationssystem vorgesehen, mit welchem ein Zugführer und/oder ein Zugsicherungssystem über den Zustand des Güterzugs, insbesondere ein Auslösen der Bremsen und/oder eine Erkennung einer Zugtrennung informiert wird.

Die Erfindung soll nachfolgend anhand von Ausführungsbeispielen und den Figuren exemplarisch beschrieben werden.

Es zeigen:
- Figur 1: ein Ausführungsbeispiel eines Güterzugs;
- Figur 2: eine schematische Darstellung eines Güterzugs mit einer elektrischen Sicherheitsschleife gemäß einem Ausführungsbeispiel der Erfindung;
- Figur 3: ein weiteres Ausführungsbeispiel der Erfindung mit einer Sicherheitsschleife mit Nachbarschaftserkennung;
- Figur 4: ein Ausführungsbeispiel der Erfindung mit elektrischer Sicherheitsschleife und Kommunikationssystem;
- Figur 5: ein weiteres Ausführungsbeispiel der Erfindung mit zentraler Spannungsversorgung und einem Kommunikationssystem.

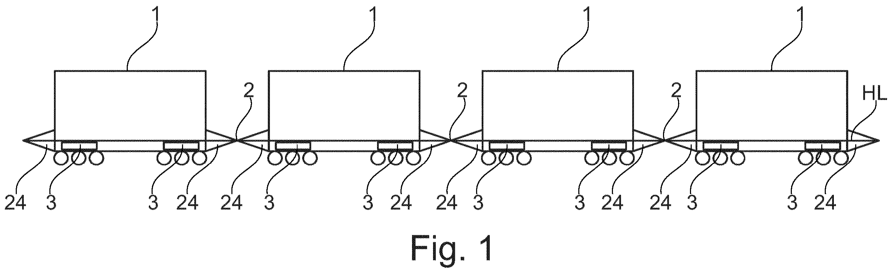

In der Figur 1 ist exemplarisch ein Güterzug dargestellt, bei dem die vorliegende Erfindung angewendet werden kann. Der Güterzug umfasst eine Anzahl von Wagen 1, die über Zugkupplungen 24 mechanisch, pneumatisch und elektrisch miteinander gekoppelt sind. Durch die Wagen 1 erstreckt sich eine Hauptluftleitung HL, an welcher Bremsen 3 druckluftleitend angeschlossen sind. Die einzelnen Abschnitte der Hauptluftleitung HL in den Wagen 1 sind über Kupplungen 2, die insbesondere in die Zugkupplungen 24 integriert sind, druckluftleitend miteinander verbunden.

Bei den Wagen 1 handelt es sich beispielsweise um eine Lokomotive und eine Anzahl von Waggons. Selbstverständlich können auch mehr als eine Lokomotive vorgesehen sein.

Die Zugkupplungen 24 sind beispielsweise als Scharfenberg-Kupplungen ausgeführt, das heißt bevorzugt als automatische Mittelpufferkupplungen, die ferngesteuert von einem Führerstand aus betätigt werden können, insbesondere elektrisch. Auch eine manuelle, mechanische Betätigung ist bevorzugt möglich.

Die Bremsen 3 bremsen den Güterzug dann ab, wenn ein Luftdruck in der Hauptluftleitung HL kleiner als ein vorbestimmter Grenzwert ist. Somit werden die Wagen 1 automatisch abgebremst, wenn eine unbeabsichtigte Auftrennung des Güterzugs, das heißt eine Trennung zwischen zwei Wagen 1 erfolgt, sodass eine Leckage in der Hauptluftleitung HL entsteht, über welche die Hauptluftleitung HL entlüftet wird. Der abfallende Luftdruck in der Hauptluftleitung HL führt dazu, dass die Bremsen jedes Wagens betätigt werden, insbesondere der Luftdruck in der Hauptluftleitung HL sie nicht mehr offen hält.

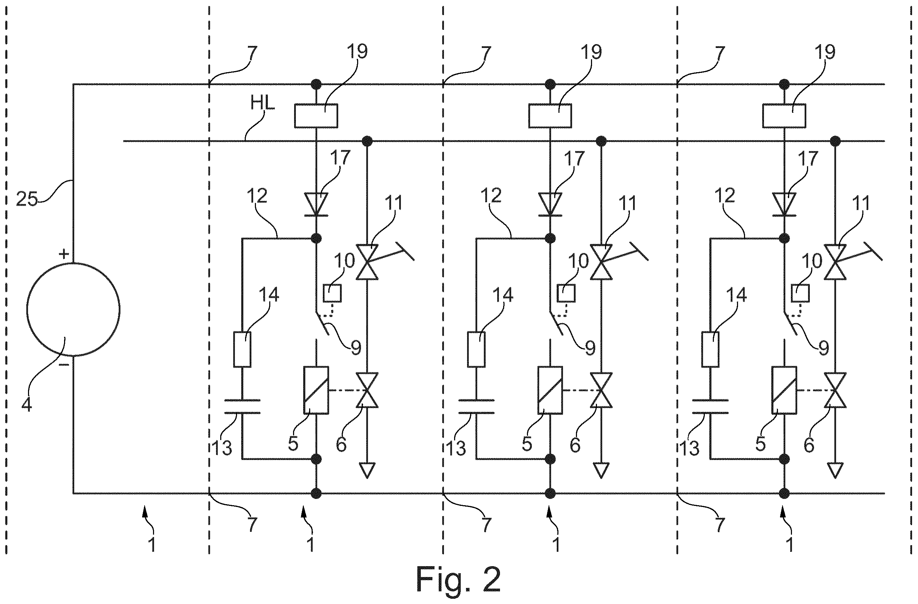

Wie aus den Figuren 2 bis 5 ersichtlich ist, kann die Hauptluftleitung HL ferner über pneumatische Ventile 6 entlüftet werden, die im nicht betätigten Zustand geöffnet sind (normally open). In den Wagen 1, insbesondere in jedem Wagen 1, ist jeweils wenigstens ein solches pneumatisches Ventil 6 angeordnet.

Es ist auch denkbar, dass nur einige oder nur der letzte Wagen mit solche einem Ventil ausgerüstet sein müssen.

Es ist auch denkbar, dass die pneumatischen Ventile 6 im nicht betätigten Zustand geschlossen sind und nur bei aktiver Ansteuerung öffnen (normally closed)

Dem pneumatischen Ventil 6 ist ein elektrischer Aktuator 5 zugeordnet, der an dem pneumatischen Ventil 6 zu dessen Betätigung angeschlossen ist, was auch eine integrierte Ausführungsform als elektropneumatisches Ventil einschließt. Entsprechend ist eine elektrische Spannungsversorgung 4 vorgesehen, an der der elektrische Aktuator 5 angeschlossen ist.

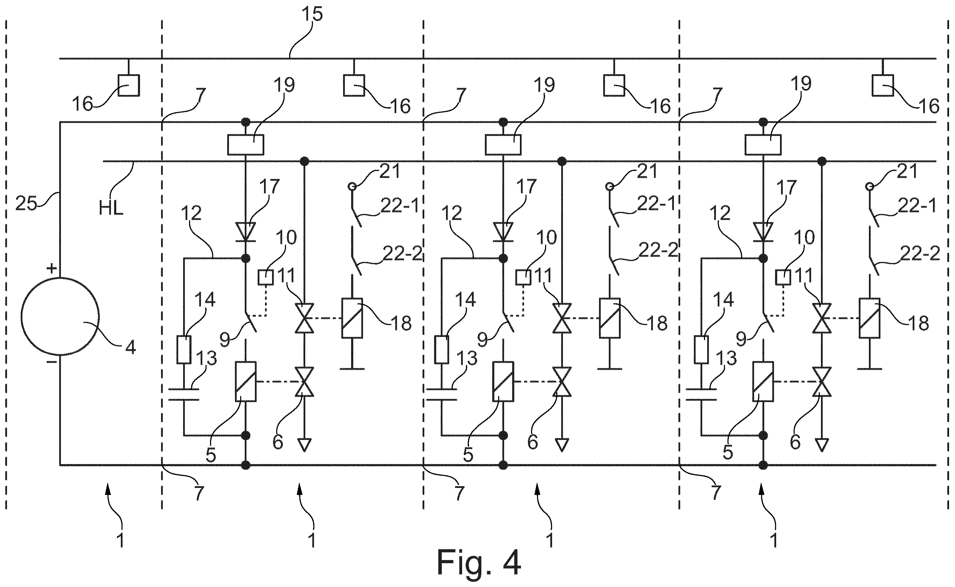

Bei den Ausführungsbeispielen gemäß den Figuren 2, 4 und 5 ist eine gemeinsame Spannungsversorgung 4 für alle elektrischen Aktuatoren 5 vorgesehen. Die gemeinsame Spannungsversorgung 4 kann gemäß einem Ausführungsbeispiel nur für die elektrische Spannungsversorgung der elektrischen Aktuatoren 5 zur Ausbildung einer sogenannten elektrischen Sicherheitsschleife 25 vorgesehen sein, was exemplarisch in den Figuren 2 und 4 dargestellt ist. Zusätzlich zu dieser Spannungsversorgung 4 kann dann eine hier nicht näher dargestellte Spannungsversorgung für jeden einzelnen Wagen 1 zur Spannungsversorgung anderer Bauteile des Wagens 1 vorgesehen sein.

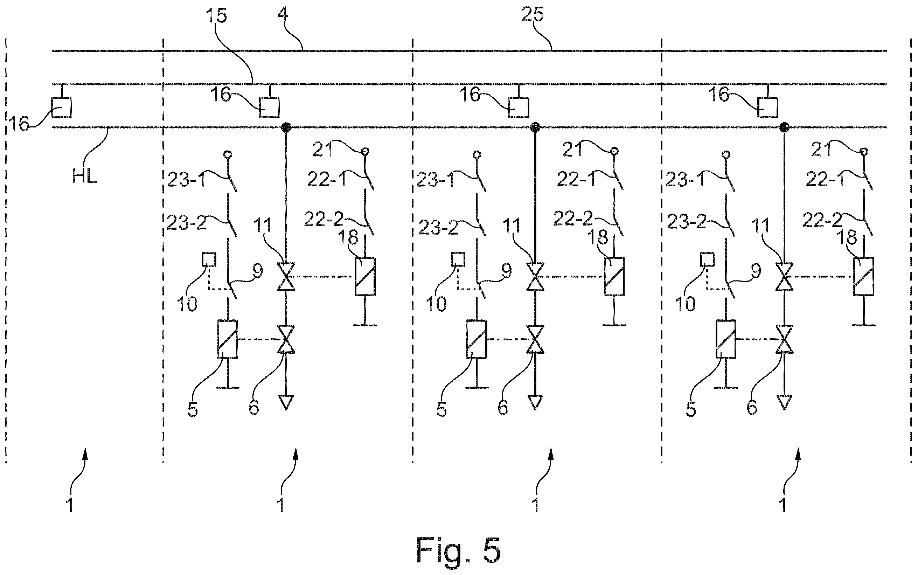

Beim exemplarisch in der Figur 5 dargestellten Ausführungsbeispiel ist die Spannungsversorgung 4 eine Spannungsversorgung für alle elektrischen Komponenten des Wagens 1 und wird somit auch als elektrische Sicherheitsschleife 25 verwendet.

Die Spannungsversorgungen 4 gemäß den Figuren 2 und 4 einerseits und gemäß der Figur 5 andererseits unterscheiden sich beispielsweise durch die Höhe der Spannung. Beispielsweise werden die Wagen 1 über die Spannungsversorgung 4 gemäß der Figur 5 mit 400 Volt Wechselspannung versorgt. Auf jedem Wagen 1 kann ein Spannungskonverter vorgesehen sein, der aus den 400 Volt Wechselspannung 48 Volt Gleichspannung für die elektrische Spannungsversorgung der elektrischen Aktuatoren 5 erzeugt. Bei den Ausführungsbeispielen gemäß den Figuren 2 und 4 hingegen kann die Spannungsversorgung 4 in der Lokomotive direkt eine vergleichsweise geringe Spannung aufweisen, beispielsweise von 48 Volt Gleichspannung. Diese Spannung wird über die Sicherheitsschleife 25 zur elektrischen Spannungsversorgung der elektrischen Aktuatoren 5 in den verschiedenen Wagen 1 verwendet. Zusätzlich kann entsprechend auf der Lokomotive eine zentrale Spannungsversorgung, beispielsweise mit 400 Volt Wechselstrom, vorgesehen sein, die über eine separate Spannungsversorgungsschleife zu den einzelnen Wagen 1 führt.

Bei einer sogenannten Zugtrennung wird gemäß den Ausführungsbeispielen 2 und 4 die Sicherheitsschleife 25 unterbrochen, bei dem Ausführungsbeispiel gemäß der Figur 5 die Spannungsversorgungsschleife mit der Spannungsversorgung 4 (400 Volt Wechselstrom), die vorliegend entsprechend auch als elektrische Sicherheitsschleife 25 bezeichnet wird.

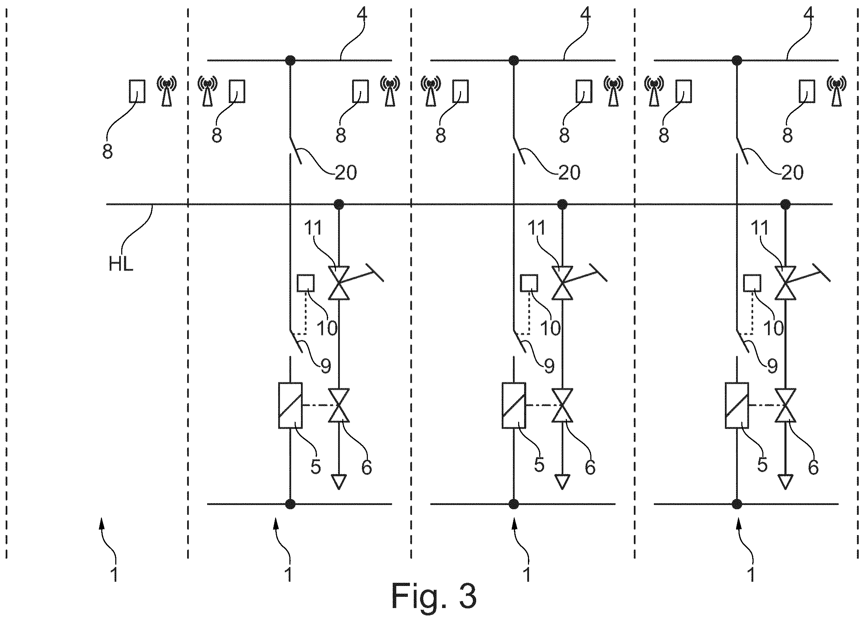

Bei dem Ausführungsbeispiel gemäß der Figur 3 weisen die Wagen 1 jeweils eine eigene oder separate Spannungsversorgung 4 auf, an welcher der jeweilige elektrische Aktuator 5 in dem Wagen 1 angeschlossen ist. Eine solche eigene Spannungsversorgung 4 kann insbesondere auch dann eine elektrische Spannung liefern, wenn der Güterzug getrennt wurde.

Bei den Ausführungsbeispielen gemäß den Figuren 2, 4 und 5 sind die elektrischen Kontakte zwischen den einzelnen Wagen 1 bevorzugt als Steckverbindungen 7 ausgeführt, was nur schematisch als Schnittstelle zwischen den Wagen 1 dargestellt ist. Wenn nun ein Wagen 1 vom benachbarten Wagen 1 getrennt wird, so werden die elektrischen Kontakte, zum Beispiel die Steckverbindungen 7, zwischen den Wagen 1 voneinander getrennt. Dadurch wird der elektrische Aktuator 5 des oder der Wagen 1, der/die von der Spannungsversorgung 4 abgetrennt wurde, stromlos geschaltet und öffnet das an ihm angeschlossene pneumatische Ventil 6, sodass die Hauptluftleitung HL durch das oder die geöffneten pneumatischen Ventile 6 unverzüglich entlüftet wird, wodurch die Bremsen 3 zumindest der Wagen 1, die abgetrennt wurden, betätigt werden. Insbesondere wird durch Auftrennung der elektrischen Kontakte zwischen zwei Wagen 1 die gesamte elektrische Sicherheitsschleife 25 stromlos geschaltet, sodass alle Wagen 1, die über die elektrische Sicherheitsschleife 25 miteinander verbunden sind, aktiv gebremst werden.

Bei dem Ausführungsbeispiel gemäß der Figuren 3, bei welchen die Wagen 1 jeweils eine eigene Spannungsversorgung 4 beziehungsweise eine auch bei Zugtrennung bestehende Spannungsversorgung 4 aufweisen, sind Sensoren 8 vorgesehen, die erkennen, ob sich ein Wagen 1 benachbart zu ihnen, das heißt zu dem Wagen 1 mit dem jeweiligen Sensor 8 befindet. Wenn dies nicht der Fall ist, schaltet der dem Sensor 8 zugeordnete elektrische Aktuator 5 das pneumatische Ventil 6, damit dieses die Hauptluftleitung HL entlüftet. Beispielsweise unterbrechen die Sensoren 8 die Verbindung zwischen der Spannungsversorgung 4 und dem jeweiligen elektrischen Aktuator 5 in dem Wagen 1, sodass wiederum der elektrische Aktuator 5 stromlos wird und das pneumatische Ventil 6 zur Entlüftung der Hauptluftleitung HL schaltet. Hierfür greift der Sensor 8 auf einen Schalter 20 zu oder umfasst einen solchen Schalter 20, der, wenn der Sensor 8 keinen benachbarten Wagen 1 erfasst, geöffnet ist, und geschlossen ist, wenn der Sensor 8 einen benachbarten Wagen 1 erfasst. Bevorzugt ist jedoch ein elektronisches Steuergerät vorgesehen, das ein Ausgabesignal des Sensors 8 empfängt und in Abhängigkeit hiervon den Schalter 20 betätigt.

Insbesondere ist an jedem Ende des Wagens 1 ein solcher Sensor 8 angeordnet, wobei die Sensoren 8 auf einen gemeinsamen Schalter 20 zugreifen können oder diesen ausbilden können oder jeweils einen eigenen Schalter 20 ausbilden oder auf einen solchen zugreifen können. Entsprechend können auch eine oder mehrere elektronische Steuergeräte vorgesehen sein, welche die Schalter 20 in Abhängigkeit der Sensorsignale schalten.

In den gezeigten Ausführungsbeispielen, jedoch nicht zwingend, ist in dem Anschluss zwischen der Spannungsversorgung 4 und dem jeweiligen elektrischen Aktuator 5 ein elektrischer Schalter 9 angeordnet, der manuell, elektrisch und/oder elektronisch betätigbar ist, um dadurch den elektrischen Aktuator 5 zu betätigen. Wenn ein solcher elektrischer Schalter 9 geöffnet wird, wird der ihm nachgeschaltete elektrische Aktuator 5 stromlos geschaltet, sodass der elektrische Aktuator 5 entsprechend das an ihm angeschlossene pneumatische Ventil 6 schaltet, um die Hauptluftleitung HL zu entlüften und den Wagen 1 abzubremsen. Damit kann eine elektro-pneumatische Bremse realisiert werden.

Beispielsweise ist eine elektronische Steuervorrichtung 10 vorgesehen, um den elektrischen Schalter 9 zu betätigen, sodass der elektrische Schalter 9 ferngesteuert betätigt werden kann, beispielsweise durch den Fahrzeugführer in einem Führerstand, insbesondere in der Lokomotive.

Bevorzugt, jedoch nicht zwingend, ist ferner in den Wagen 1 jeweils ein Deaktivierungsventil 11 angeordnet, mit welchem eine pneumatische Verbindung zwischen der Hauptluftleitung HL und dem pneumatischen Ventil 6 absperrbar ist.

Dadurch kann das pneumatische Ventil 6 deaktiviert werden, beispielsweise für einen Rangiermodus, in dem der jeweilige Wagen 1 verschoben werden kann und nicht automatisch gebremst werden soll. Auch ein solches Deaktivierungsventil 11 kann zum Beispiel elektrisch, pneumatisch und/oder manuell betätigbar sein.

Damit kurzzeitige Stromausfälle oder Spannungsschwankungen nicht zu einem Auslösen des elektrischen Aktuators 5 führen, ist bevorzugt ein elektrischer Parallelzweig 12 vorgesehen, der den elektrischen Aktuator 5 elektrisch umgeht und in dem ein Kondensator 13 und ein elektrischer Widerstand 14 in Reihe zueinander geschaltet sind, um Energie zu puffern. Um ein ungewolltes Entladen des Kondensators 13 zu verhindern, kann vor dem Abzweig des elektrischen Parallelzweiges 12 im Anschluss zwischen der Spannungsversorgung 4 und dem elektrischen Aktuator 5 eine Diode 17 vorgesehen sein.

Prinzipiell ist es auch möglich, dass bei den Ausführungsbeispielen und allgemein bei der Erfindung das pneumatische Ventil 6 im nicht angesteuerten Zustand geschlossen ist (normally closed).

Bei den Ausführungsbeispielen gemäß den Figuren 2, 4 und 5 sind die pneumatischen Ventile 6 bevorzugt so lange geschlossen, wie die elektrischen Aktuatoren 5 mit der elektrischen Spannungsversorgung 4 verbunden sind, das heißt die elektrischen Schalter 9 geschlossen sind und die elektrische Sicherheitsschleife 25 nicht unterbrochen wurde.

Beim Ausführungsbeispiel gemäß der Figur 3 sind die pneumatischen Ventile 6 bevorzugt so lange geschlossen, wie die elektrischen Aktuatoren 5 mit der elektrischen Spannungsversorgung 4 verbunden sind, das heißt die elektrischen Schalter 9 geschlossen sind und die Schalter 20 geschlossen sind.

Wird die elektrische Sicherheitsschleife 25 unterbrochen beziehungsweise der Schalter 20 geöffnet, weil ein oder mehrere Wagen 1 abgekuppelt werden, dann ist der betreffende elektrische Aktuator 5 nicht mehr mit der Spannungsversorgung 4 verbunden, fällt ab und öffnet über das pneumatische Ventil 6 die Hauptluftleitung HL, wodurch die Bremsen 3 einfallen und die Wagen 1 bis zum Stillstand abbremsen. Zusätzlich können die elektrischen Aktoren 5, wie dargestellt, auch über die elektrischen Schalter 9 spannungslos geschaltet werden, mit der entsprechenden Folge.

Bei den Ausführungsbeispielen gemäß der Figuren 4 und 5 ist ein Kommunikationssystem mit einer Kommunikationsleitung 15 vorgesehen, die durch die Wagen 1 geführt ist. Die Ausführungsbeispiele sind eine Weiterentwicklung des Ausführungsbeispiels der Figur 2, könnten jedoch auch mit der Wagenerkennungsvorrichtung, umfassend Sensoren 8 statt der elektrischen Sicherheitsschleife 25, wie in der Figur 3 dargestellt ist, ausgeführt werden. Insofern wird auf die Beschreibung der Figuren 2 und 3 verwiesen, um Wiederholungen zu vermeiden. Generell lassen sich zudem die Wagenerkennungsvorrichtung gemäß der Figur 2 mit elektrischen Kontakten, über welche die elektrischen Aktuatoren 5 mit Strom versorgt werden, zwischen den Wagen 1 und die Wagenerkennungsvorrichtung gemäß der Figur 3 mit Sensoren 8, in Abhängigkeit von deren Signal die elektrischen Aktuatoren 5 stromlos geschaltet werden, auch miteinander kombinieren.

Mit der Kommunikationsleitung 15 sind Steuergeräte 16 in den Wagen 1 verbunden. Das Kommunikationssystem überträgt über die Kommunikationsleitungen 15 Befehle, mit welchen zum Beispiel die pneumatischen Ventile 6 deaktiviert werden können und/oder die elektrischen Aktoren 5 betätigt werden können, um die pneumatischen Ventile 6 derart zu schalten, dass die Hauptluftleitung HL entlüftet wird, um den Wagen 1 abzubremsen. So ist gemäß den Figuren 4 und 5 dem jeweiligen pneumatischen Ventil 6 wiederum ein pneumatisches Deaktivierungsventil 11 vorgeschaltet, das heißt in der Verbindung zwischen der Hauptluftleitung HL und dem pneumatischen Ventil 6 angeordnet. Mit dem Deaktivierungsventil 11 ist ein elektrischer Deaktivierungsaktuator 18 verbunden, der über die Kommunikationsleitung 15 beziehungsweise das an dieser angeschlossene Steuergerät 16 betätigt wird.

Beispielsweise ist der elektrische Deaktivierungsaktuator 18 derart eingerichtet, dass er im stromlosen Zustand das Deaktivierungsventil 11 öffnet und im bestromten Zustand schließt. Hierfür kann der elektrische Deaktivierungsaktuator 18 zum Beispiel an einer eigenen Spannungsversorgung 21 über einen oder mehrere mit dem jeweiligen Steuergerät 16 betätigbare Schalter 22-1, 22-2 angeschlossen sein. Beispielsweise kann im gezeigten Ausführungsbeispiel durch Schließen des einen der beiden Schalter 22-1, 22-2 ein Rangiermodus aktiviert werden und durch Schließen des anderen der beiden Schalter 22-1, 22-2 ein Entkuppelbefehl erteilt werden. Aus Sicherheitsgründen sind die beiden Schalter 22-1, 22-2 in Reihe geschaltet, das heißt es müssen bewusst beide Schalter 22-1, 22-2 geschlossen werden, um die Sicherheitsschleife 25 zu deaktivieren. Das bedeutet, dass der Wagen 1 auf jeden Fall im Rangiermodus sein muss (erster Schalter 22-1 geschlossen) und zusätzlich noch ein Entkuppelbefehl für den Wagen 1 befohlen wird (zweiter Schalter 22-2 geschlossen), erst dann ist die Sicherheitsschleife 25 deaktiviert. Damit soll ein versehentliches Deaktivieren der Sicherheitsschleife 25 verhindert werden.

Beim Ausführungsbeispiel gemäß der Figur 5 überwachen die Steuergeräte 16 (oder andere Steuergeräte), ob die durch die Wagen 1 geführte elektrische Spannungsversorgung 4, zum Beispiel mit 400 Volt, vorhanden ist und ob die Kommunikationsleitung 15 im entsprechenden Wagen 1 aktiv, das heißt nicht abgekoppelt von den anderen Wagen 1, ist. Wenn im jeweiligen Wagen 1 die elektrische Spannungsversorgung 4 verfügbar ist, wird der erste der beiden Schalter 23-1 geschlossen, und wenn die Kommunikationsleitung 15 aktiv ist, wird der in Reihe zu dem ersten der beiden Schalter 23-1 geschaltete zweite Schalter 23-2 geschlossen. Wenn einer der beiden Schalter 23-1, 23-2 geöffnet ist, wird entsprechend der elektrische Aktuator 5 stromlos geschaltet, die Hauptluftleitung HL mit dem pneumatischen Ventil 6 entlüftet und der Wagen 1 abgebremst.

Eine Überwachung der Spannungsversorgung 4 ist dann sinnvoll, wenn ein elektrischer Speicher im Wagen 1 auch dann das Steuergerät 16 und den elektrischen Aktuator 5 mit elektrischer Leistung versorgt, wenn die Spannungsversorgung 4 unterbrochen wurde.

Ferner kann gemäß einem Ausführungsbeispiel das Steuergerät 16 auch zum Beispiel Sensoren 8, wie anhand der Figur 3 beschrieben, überwachen und einen entsprechenden Schalter im elektrischen Anschluss des elektrischen Aktuators 5 öffnen, falls kein benachbarter Wagen 1 erkannt wird.

Ferner ist auch denkbar, dass nur die Steuergeräte 16 einiger Wagen oder nur das Steuergerät des letzten Wagen überwachen, ob die Kommunikation zu einem führenden Fahrzeug besteht und bei Ausfall der Verbindung nur die Ventile 6 der jeweils zugehörigen Wagen 1 betätigt werden. In einer solchen Variante müsste nur zumindest der letzte Wagen mit einem Steuergerät 16 ausgestattet sein, die anderen Wagen müssten nur die Kommunikation und falls vorhanden die Spannung über die Zugkupplungen 24 weiterleiten.

Die Funktionen der in den Figuren separat dargestellten elektronischen Steuervorrichtung 10 und dem Steuergerät 16 in einem Wagen 1 können auch durch ein gemeinsames Steuergerät oder eine gemeinsame Steuervorrichtung zur Verfügung gestellt werden.

### Bezugszeichenliste

- 1: Wagen
- 2: Kupplung
- 3: Bremse
- 4: elektrische Spannungsversorgung
- 5: elektrischer Aktuator
- 6: pneumatisches Ventil
- 7: Steckverbindung
- 8: Sensor
- 9: elektrischer Schalter
- 10: elektronische Steuervorrichtung
- 11: Deaktivierungsventil
- 12: elektrischer Parallelzweig
- 13: Kondensator
- 14: elektrischer Widerstand
- 15: Kommunikationsleitung
- 16: Steuergerät
- 17: Diode
- 18: elektrischer Deaktivierungsaktuator
- 19: elektrischer Wandler
- 20: elektrischer Schalter
- 21: Spannungsversorgung
- 22-1, 22-2: elektrischer Schalter
- 23-1, 23-2: elektrischer Schalter
- 24: Zugkupplung
- 25: elektrische Sicherheitsschleife

## Patentansprüche

1. Güterzug, umfassend eine Vielzahl von mechanisch und elektrisch miteinander gekuppelten Wagen (1);
mit einer Hauptluftleitung (HL), die sich über Kupplungen (2) zwischen den Wagen (1) durch alle Wagen (1) erstreckt;
mit an der Hauptluftleitung (HL) angeschlossenen Bremsen (3) in dem oder jedem Wagen (1), welche eingerichtet sind, in Abhängigkeit eines Luftdruckes in der Hauptluftleitung (HL) den jeweiligen Wagen (1) abzubremsen;
**gekennzeichnet durch** die folgenden Merkmale:
mit wenigstens einem elektrischen Aktuator (5) in einem oder jedem Wagen (1);
mit einer Wagenerkennungsvorrichtung, die eingerichtet ist, die Abwesenheit eines zu dem jeweiligen Wagen (1) mit dem elektrischen Aktuator (5) benachbart angeordneten Wagens (1) zu erkennen;
mit wenigstens einem an der Hauptluftleitung (HL) angeschlossenen pneumatischen Ventil (6), mit dem die Hauptluftleitung (HL) entlüftet werden kann; wobei
der elektrische Aktuator (5) an dem wenigstens einen pneumatischen Ventil (6) zu dessen Betätigung angeschlossen ist, und
der elektrische Aktuator (5) an der Wagenerkennungsvorrichtung angeschlossen ist, um bei erkannter Abwesenheit des benachbarten Wagens (1) das pneumatische Ventil (6) zur Entlüftung der Hauptluftleitung (HL) zu schalten.

2. Güterzug gemäß Anspruch 1, **dadurch gekennzeichnet, dass** die Wagenerkennungsvorrichtung elektrische Kontakte zwischen dem Wagen (1) und dem benachbart angeordneten Wagen (1) umfasst, die bei aneinander gekuppelten Wagen (1) geschlossen sind und bei Trennung des Wagens (1) vom benachbart angeordneten Wagen (1) geöffnet werden, der elektrische Aktuator (5) über die elektrischen Kontakte mit elektrischer Spannung versorgt wird und der elektrische Aktuator (5) eingerichtet ist, im stromlosen Zustand das pneumatische Ventil (6) zur Entlüftung der Hauptluftleitung (HL) zu schalten.

3. Güterzug gemäß einem der Ansprüche 1 oder 2, **dadurch gekennzeichnet, dass** die Wagenerkennungsvorrichtung wenigstens einen Sensor (8) zur Erkennung des Vorhandenseins des benachbarten Wagens (1) umfasst.

4. Güterzug gemäß Anspruch 3, **dadurch gekennzeichnet, dass** der wenigstens eine Sensor (8) einen Näherungssensor umfasst und/oder eingerichtet ist eine Unterbrechung einer Funkverbindung zwischen dem Wagen (1) und dem benachbarten Wagen (1) zu erfassen.

5. Güterzug gemäß einem der Ansprüche 1 bis 4, **dadurch gekennzeichnet, dass** zwischen einer Spannungsversorgung (4) für den elektrischen Aktuator (5) und dem elektrischen Aktuator (5) ein elektrischer Schalter (9) angeordnet ist, der zumindest mittelbar manuell oder durch eine elektronische Steuervorrichtung (10) betätigbar ist, um den elektrischen Aktuator (5) zu betätigen.

6. Güterzug gemäß einem der Ansprüche 1 bis 5, **dadurch gekennzeichnet, dass** das pneumatische Ventil (6) deaktivierbar ist, insbesondere elektrisch, pneumatisch oder manuell.

7. Güterzug gemäß Anspruch 6, **dadurch gekennzeichnet, dass** zwischen der Hauptluftleitung (HL) und dem pneumatischen Ventil (6) ein Deaktivierungsventil (11) positioniert ist, mit welchem eine pneumatische Verbindung zwischen der Hauptluftleitung (HL) und dem pneumatischen Ventil (6) absperrbar ist, wobei das Deaktivierungsventil (11) insbesondere elektrisch, pneumatisch oder manuell betätigbar ist.

8. Güterzug gemäß einem der Ansprüche 1 bis 7, **dadurch gekennzeichnet, dass** ein elektrischer Parallelzweig (12) parallel zum elektrischen Aktuator (5) mit einem zueinander in Reihe geschalteten Kondensator (13) und elektrischem Widerstand (14) angeordnet ist, wobei insbesondere eine Diode (17) in Reihe zu dem Kondensator (13) geschaltet ist, insbesondere vor einem Abzweig des elektrischen Parallelzweiges (12) vor dem elektrischen Aktuator (5).

9. Güterzug gemäß einem der Ansprüche 6 bis 8, **dadurch gekennzeichnet, dass** der Güterzug ein Kommunikationssystem, insbesondere digitales Kommunikationssystem, umfasst, das wenigstens eine durch die Wagen (1) geführte Kommunikationsleitung (15) und in allen, einigen oder nur im letzten Wagen angeordnete, an der Kommunikationsleitung (15) angeschlossene Steuergeräte (16) umfasst, und die Steuergeräte (16) zumindest mittelbar an den pneumatischen Ventilen (6) und/oder den Deaktivierungsventilen (11) angeschlossen sind, um wenigstens ein pneumatisches Ventil (6) oder die pneumatischen Ventile (6) wahlweise zu deaktivieren und/oder zu betätigen.

10. Güterzug gemäß den Ansprüchen 5 und 9, **dadurch gekennzeichnet, dass** die elektrischen Schalter (9) zumindest mittelbar an den Steuergeräten (16) angeschlossen und durch die Steuergeräte (16) betätigbar sind.

11. Güterzug gemäß Anspruch 7 und einem der Ansprüche 9 oder 10, **dadurch gekennzeichnet, dass** ein elektrischer Deaktivierungsaktuator (18) am Deaktivierungsventil (11) angeschlossen ist, der vom zugeordneten Steuergerät (16) des Wagens (1) betätigbar ist.

12. Güterzug gemäß einem der Ansprüche 9 bis 11, **dadurch gekennzeichnet, dass** die Steuergeräte (16) eingerichtet sind, eine Unterbrechung der Kommunikationsleitung (15) zu erfassen und bei Unterbrechung das oder die pneumatischen Ventile (6) wenigstens des oder zumindest eines oder mehrerer der nicht mehr mit der Kommunikationsleitung (15) verbundenen Wagen (1) zu betätigen, um die Hauptluftleitung (HL) zu entlüften.

13. Güterzug gemäß einem der Ansprüche 1 bis 12, **dadurch gekennzeichnet, dass** der elektrische Aktuator (5) und das pneumatische Ventil (6) integral als elektropneumatisches Ventil ausgeführt sind.

14. Güterzug gemäß einem der Ansprüche 2 bis 13, **dadurch gekennzeichnet, dass** mehrere oder alle Wagen (1) über eine zentrale Spannungsversorgung (4) in einem Wagen (1) mit elektrischer Spannung versorgt werden, und zwar über die elektrischen Kontakte oder über zu den elektrischen Kontakten zusätzlich vorgesehene elektrische Kontakte.
